# EUROPEAN PATENT APPLICATION

(11) **EP 4 682 364 A1**
(43) Date of publication of application: **21.01.2026**
(21) Application number: 25189077.8
(22) Date of filing: 11.07.2025
(51) Int. Cl.: F02C 7/36, F02C 7/12, F02C 7/14

(54) **GEARBOX THERMAL CONTROL SYSTEM**

(30) Priority: 15.07.2024 US 202418772665
(71) Applicant: General Electric Company, Cincinnati, Ohio 45215 (US)
(72) Inventor: MILLER, Brandon Wayne, Evendale, 45241 (US); SIBBACH, Arthur William, Boxford, 01921 (US); HUDECKI, Andrew, Evendale, 45241 (US); RAMBO, Jeffrey Douglas, Evendale, 45215 (US)
(74) Representative: Openshaw & Co.

(57) **Abstract**

A system for a gas turbine engine (100) includes a gearbox (155) including a coolant inlet (206), a coolant outlet (208), and a metal portion (210), a first coolant supply line (216) in fluid communication with the coolant inlet (206) of the gearbox (155), a first temperature sensor (228) in thermal communication with the first coolant supply line (216), a second coolant supply line (218) in fluid communication with the coolant outlet (208) of the gearbox (155), a second temperature sensor (230) in thermal communication with the second coolant supply line (218), a third temperature sensor (232) in thermal communication with the metal portion (210) of the gearbox (155), a bypass line connecting the first coolant supply line (216) to the second coolant supply line (218), a bypass valve (222) disposed at a junction of the second coolant supply line (218) and the bypass line, and a controller (234) configured to actuate the bypass valve (222, 226) based on at least one of first temperature data from the first temperature sensor (228), second temperature data from the second temperature sensor (230), or third temperature data from the third temperature sensor (232).

## Description

### FIELD

The present disclosure relates to temperature control systems for reduction gearboxes.

### BACKGROUND

Lubricant oil systems for turbine systems may aid in the prevention of mechanical wear in the components (e.g., generators, bearings, gears) of the turbine system. More specifically, lubricant oil systems may provide a consistent and steady flow of oils to turbine system components, such as reduction gearboxes, in order to lubricate, clean component contact surfaces, and remove heat generated by moving and stationary turbine system components. The temperature of the lubricant oil flowing through the components of the turbine system may be dependent, at least in part, on the operational characteristics (e.g., temperature) of the turbine system and the turbine system components. As a result, conventional lubricant oil systems may include a heat exchanger, which may regulate the temperature of the lubricant oil depending on the operational characteristic of the turbine system. Using cooling fluid (e.g., water or other cooling fluid), the heat exchanger of the lubricant oil system may regulate the temperature of the lubricant oil before it flows to the turbine system.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic view of an exemplary gas turbine engine.
FIG. 2 is a schematic view of a gearbox system for the exemplary gas turbine engine.
FIG. 3 is a block diagram illustrating operation of the gearbox system.
FIG. 4 is a schematic diagram of a controller.
FIG. 5 is a diagram of an exemplary method for operating the exemplary gas turbine engine.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

As used herein, the terms "first," "second," "third," and other ordinals are used to distinguish one component from another and are not intended to signify location or importance of the individual components.

The terms "upstream" and "downstream" refer to the relative direction with respect to fluid flow in a fluid pathway. For example, "upstream" refers to the direction from which fluid flows, and "downstream" refers to the direction to which the fluid flows.

The present disclosure is generally related to temperature control of gearboxes for use during operation of a gas turbine engine with a coolant, such as lubricant oil. When the gearbox is overly hot, gear teeth may scuff, reducing a lifespan of the gearbox. When the gearbox is cold, a viscosity of the coolant may slow operation of the gears, decreasing an overall efficiency of the gearbox. There is an opportunity for a system to control coolant temperature for increased viscosity (and improved efficiency) while reducing or inhibiting wear from overly hot components.

Using bypass lines in a coolant supply system allows for finer temperature control for the gearbox, allowing for increased efficiency while inhibiting scuffing of the gear teeth. The bypass lines provide heated coolant to the gearbox by bypassing a heat exchanger (preventing the heat exchanger from cooling the coolant) or providing heated coolant from an outlet of the gearbox back to an inlet of the gearbox. A controller operates the bypass lines to increase the temperature of the coolant to a specified temperature to optimize efficiency of the gearbox based on a current engine operating condition, such as cruise, climb, or landing.

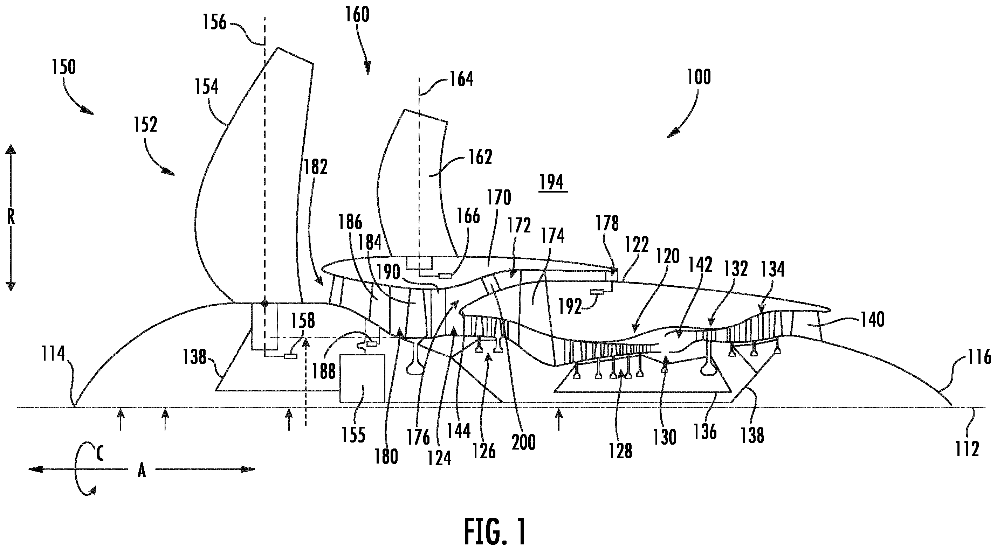

Referring now to FIG. 1, a schematic cross-sectional view of an engine 100 (e.g., a gas turbine engine) is provided according to an example embodiment of the present disclosure. Particularly, FIG. 1 provides a gas turbine engine having a rotor assembly with a single stage of unducted rotor blades. In such a manner, the rotor assembly may be referred to herein as an "unducted fan," or the entire engine 100 may be referred to as an "unducted gas turbine engine." In addition, the engine 100 of FIG. 1 includes a third stream extending from the compressor section to a rotor assembly flowpath over the turbomachine, as will be explained in more detail below.

For reference, the engine 100 defines an axial direction A, a radial direction R, and a circumferential direction C. Moreover, the engine 100 defines an axial centerline or longitudinal axis 112 that extends along the axial direction A. In general, the axial direction A extends parallel to the longitudinal axis 112, the radial direction R extends outward from and inward to the longitudinal axis 112 in a direction orthogonal to the axial direction A, and the circumferential direction extends three hundred sixty degrees (360°) around the longitudinal axis 112. The engine 100 extends between a forward end 114 and an aft end 116, e.g., along the axial direction A.

The engine 100 includes a turbomachine 120 and a rotor assembly, also referred to a fan section 150, positioned upstream thereof. Generally, the turbomachine 120 includes, in serial flow order, a compressor section, a combustion section, a turbine section, and an exhaust section. Particularly, as shown in FIG. 1, the turbomachine 120 includes a core cowl 122 that defines an annular core inlet 124. The core cowl 122 further encloses at least in part a low pressure system and a high pressure system. For example, the core cowl 122 depicted encloses and supports at least in part a booster or low pressure ("LP") compressor 126 for pressurizing the air that enters the turbomachine 120 through the annular core inlet 124. A high pressure ("HP"), multi-stage, axial-flow compressor 128 receives pressurized air from the LP compressor 126 and further increases the pressure of the air. The pressurized air stream flows downstream to a combustor 130 of the combustion section where fuel is injected into the pressurized air stream and ignited to raise the temperature and energy level of the pressurized air.

It will be appreciated that as used herein, the terms "high/low speed" and "high/low pressure" are used with respect to the high pressure/high speed system and low pressure/low speed system interchangeably. Further, it will be appreciated that the terms "high" and "low" are used in this same context to distinguish the two systems, and are not meant to imply any absolute speed and/or pressure values.

The high energy combustion products flow from the combustor 130 downstream to an HP turbine 132. The HP turbine 132 drives the HP compressor 128 through an HP shaft 136. In this regard, the HP turbine 132 is drivingly coupled with the HP compressor 128. The high energy combustion products then flow to a LP turbine 134. The LP turbine 134 drives the LP compressor 126 and components of the fan section 150 through a LP shaft 138. In this regard, the LP turbine 134 is drivingly coupled with the LP compressor 126 and components of the fan section 150. The LP shaft 138 is coaxial with the HP shaft 136 in this example embodiment. After driving each of the turbines 132, 134, the combustion products exit the turbomachine 120 through a turbomachine exhaust nozzle 140.

Accordingly, the turbomachine 120 defines a working gas flowpath or core duct 142 that extends between the annular core inlet 124 and the turbomachine exhaust nozzle 140. The core duct 142 is an annular duct positioned generally inward of the core cowl 122 along the radial direction R. The core duct 142 (e.g., the working gas flowpath through the turbomachine 120) may be referred to as a second stream.

The fan section 150 includes a fan 152, which is the primary fan in this example embodiment. For the depicted embodiment of FIG. 1, the fan 152 is an open rotor or unducted fan 152. In such a manner, the engine 100 may be referred to as an open rotor engine.

As depicted, the fan 152 includes an array of fan blades 154 (only one shown in FIG. 1). The fan blades 154 are rotatable, e.g., about the longitudinal axis 112. As noted above, the fan 152 is drivingly coupled with the LP turbine 134 via the LP shaft 138. For the embodiments shown in FIG. 1, the fan 152 is coupled with the LP shaft 138 via a gearbox 155 (such as a speed reduction gearbox), e.g., in an indirect-drive or geared-drive configuration.

Moreover, the array of fan blades 154 can be arranged in equal spacing around the longitudinal axis 112. Each fan blade 154 has a root and a tip and a span defined therebetween. Each fan blade 154 defines a central blade axis 156. For this embodiment, each fan blade 154 of the fan 152 is rotatable about its central blade axis 156, e.g., in unison with one another. One or more actuators 158 are provided to facilitate such rotation and therefore may be used to change a pitch of the fan blades 154 about their respective central blades' axes 156.

The fan section 150 further includes a fan guide vane array 160 that includes fan guide vanes 162 (only one shown in FIG. 1) disposed around the longitudinal axis 112. For this embodiment, the fan guide vanes 162 are not rotatable about the longitudinal axis 112. Each fan guide vane 162 has a root and a tip and a span defined therebetween. The fan guide vanes 162 may be unshrouded as shown in FIG. 1 or, alternatively, may be shrouded, e.g., by an annular shroud spaced outward from the tips of the fan guide vanes 162 along the radial direction R or attached to the fan guide vanes 162.

Each fan guide vane 162 defines a central blade axis 164. For this embodiment, each fan guide vane 162 of the fan guide vane array 160 is rotatable about its respective central blade axis 164, e.g., in unison with one another. One or more actuators 166 are provided to facilitate such rotation and therefore may be used to change a pitch of the fan guide vane 162 about its respective central blade axis 164. However, in other embodiments, each fan guide vane 162 may be fixed or unable to be pitched about its central blade axis 164. The fan guide vanes 162 are mounted to the fan cowl 170.

As shown in FIG. 1, in addition to the fan 152, which is unducted, a ducted fan 184 is included aft of the fan 152, such that the engine 100 includes both a ducted and an unducted fan which both serve to generate thrust through the movement of air without passage through at least a portion of the turbomachine 120 (e.g., without passage through the HP compressor 128 and combustion section for the embodiment depicted). The ducted fan 184 is rotatable about the same axis (e.g., the longitudinal axis 112) as the fan blade 154. The ducted fan 184 is, for the embodiment depicted, driven by the LP turbine 134 (e.g. coupled to the LP shaft 138). In the embodiment depicted, as noted above, the fan 152 may be referred to as the primary fan, and the ducted fan 184 may be referred to as a secondary fan. It will be appreciated that these terms "primary" and "secondary" are terms of convenience, and do not imply any particular importance, power, or the like.

The ducted fan 184 includes a plurality of fan blades (not separately labeled in FIG. 1) arranged in a single stage, such that the ducted fan 184 may be referred to as a single stage fan. The fan blades of the ducted fan 184 can be arranged in equal spacing around the longitudinal axis 112. Each blade of the ducted fan 184 has a root and a tip and a span defined therebetween.

The fan cowl 170 annularly encases at least a portion of the core cowl 122 and is generally positioned outward of at least a portion of the core cowl 122 along the radial direction R. Particularly, a downstream section of the fan cowl 170 extends over a forward portion of the core cowl 122 to define a fan duct flowpath, or simply a fan duct 172. According to this embodiment, the fan flowpath or fan duct 172 may be understood as forming at least a portion of the third stream of the engine 100.

Incoming air may enter through the fan duct 172 through a fan duct inlet 176 and may exit through a fan exhaust nozzle 178 to produce propulsive thrust. The fan duct 172 is an annular duct positioned generally outward of the core duct 142 along the radial direction R. The fan cowl 170 and the core cowl 122 are connected together and supported by a plurality of substantially radially-extending, circumferentially-spaced stationary struts 174 (only one shown in FIG. 1). The stationary struts 174 may each be aerodynamically contoured to direct air flowing thereby. Other struts in addition to the stationary struts 174 may be used to connect and support the fan cowl 170 and/or core cowl 122. In many embodiments, the fan duct 172 and the core duct 142 may at least partially co-extend (generally axially) on opposite sides (e.g., opposite radial sides) of the core cowl 122. For example, the fan duct 172 and the core duct 142 may each extend directly from a leading edge 144 of the core cowl 122 and may partially co-extend generally axially on opposite radial sides of the core cowl 122.

The engine 100 also defines or includes an inlet duct 180. The inlet duct 180 extends between the engine inlet 182 and the annular core inlet 124/fan duct inlet 176. The engine inlet 182 is defined generally at the forward end of the fan cowl 170 and is positioned between the fan 152 and the fan guide vane array 160 along the axial direction A. The inlet duct 180 is an annular duct that is positioned inward of the fan cowl 170 along the radial direction R. Air flowing downstream along the inlet duct 180 is split, not necessarily evenly, into the core duct 142 and the fan duct 172 by a fan duct splitter or leading edge 144 of the core cowl 122. In the embodiment depicted, the inlet duct 180 is wider than the core duct 142 along the radial direction R. The inlet duct 180 is also wider than the fan duct 172 along the radial direction R.

Notably, for the embodiment depicted, the engine 100 includes one or more features to increase an efficiency of a third stream thrust, Fn_{3S} (e.g., a thrust generated by an airflow through the fan duct 172 exiting through the fan exhaust nozzle 178, generated at least in part by the ducted fan 184). In particular, the engine 100 further includes an array of inlet guide vanes 186 positioned in the inlet duct 180 upstream of the ducted fan 184 and downstream of the engine inlet 182. The array of inlet guide vanes 186 are arranged around the longitudinal axis 112. For this embodiment, the inlet guide vanes 186 are not rotatable about the longitudinal axis 112. Each inlet guide vanes 186 defines a central blade axis (not labeled for clarity), and is rotatable about its respective central blade axis, e.g., in unison with one another. In such a manner, the inlet guide vanes 186 may be considered a variable geometry component. One or more actuators 188 are provided to facilitate such rotation and therefore may be used to change a pitch of the inlet guide vanes 186 about their respective central blade axes. However, in other embodiments, each inlet guide vanes 186 may be fixed or unable to be pitched about its central blade axis.

Further, located downstream of the ducted fan 184 and upstream of the fan duct inlet 176, the engine 100 includes an array of outlet guide vanes 190. As with the array of inlet guide vanes 186, the array of outlet guide vanes 190 are not rotatable about the longitudinal axis 112. However, for the embodiment depicted, unlike the array of inlet guide vanes 186, the array of outlet guide vanes 190 are configured as fixed-pitch outlet guide vanes.

Further, it will be appreciated that for the embodiment depicted, the fan exhaust nozzle 178 of the fan duct 172 is further configured as a variable geometry exhaust nozzle. In such a manner, the engine 100 includes one or more actuators 192 for modulating the variable geometry exhaust nozzle. For example, the variable geometry exhaust nozzle may be configured to vary a total cross-sectional area (e.g., an area of the nozzle in a plane perpendicular to the longitudinal axis 112) to modulate an amount of thrust generated based on one or more engine operating conditions (e.g., temperature, pressure, mass flowrate, etc. of an airflow through the fan duct 172). A fixed geometry exhaust nozzle may also be adopted.

The combination of the array of inlet guide vanes 186 located upstream of the ducted fan 184, the array of outlet guide vanes 190 located downstream of the ducted fan 184, and the fan exhaust nozzle 178 may result in a more efficient generation of third stream thrust, Fn_{3S}, during one or more engine operating conditions. Further, by introducing a variability in the geometry of the inlet guide vanes 186 and the fan exhaust nozzle 178, the engine 100 may be capable of generating more efficient third stream thrust, Fn_{3S}, across a relatively wide array of engine operating conditions, including takeoff and climb (where a maximum total engine thrust Fn_{Total}, is generally needed) as well as cruise (where a lesser amount of total engine thrust, Fn_{Total}, is generally needed).

Moreover, referring still to FIG. 1, in exemplary embodiments, air passing through the fan duct 172 may be relatively cooler (e.g., lower temperature) than one or more fluids utilized in the turbomachine 120. In this way, one or more heat exchangers 200 may be positioned in thermal communication with the fan duct 172. For example, one or more heat exchangers 200 may be disposed within the fan duct 172 and utilized to cool one or more fluids from the core engine with the air passing through the fan duct 172, as a resource for removing heat from a fluid, e.g., compressor bleed air, oil or fuel.

Although not depicted, the heat exchanger 200 may be an annular heat exchanger extending substantially 360 degrees in the fan duct 172 (e.g., at least 300 degrees, such as at least 330 degrees). In such a manner, the heat exchanger 200 may effectively utilize the air passing through the fan duct 172 to cool one or more systems of the engine 100 (e.g., lubrication oil systems, compressor bleed air, electrical components, etc.). The heat exchanger 200 uses the air passing through the fan duct 172 as a heat sink and correspondingly increases the temperature of the air downstream of the heat exchanger 200 and exiting the fan exhaust nozzle 178.

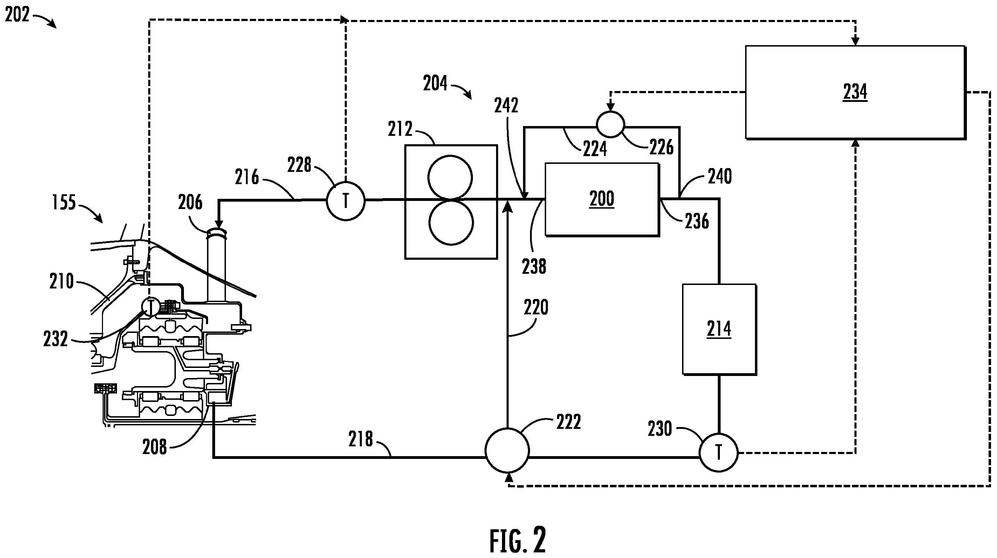

Now referring to FIG. 2, a schematic view of a gearbox system 202 for a gearbox 155 is shown. The gearbox system 202 includes the gearbox 155 and a cooling system 204. The gearbox 155 includes a coolant inlet 206, a coolant outlet 208, and a metal portion 210. The metal portion 210 of the gearbox 155 is a component of the gearbox 155 that is formed of a metal (e.g., a pure metal or a metal alloy), such as a casing, a flange, a ring gear, or another stationary element.

The cooling system 204 includes a pump 212, a coolant store 214, a first coolant supply line 216, a second coolant supply line 218, a gearbox bypass line 220, a gearbox bypass valve 222, a heat exchanger 200, a heat exchanger bypass line 224, a heat exchanger bypass valve 226, a first temperature sensor 228, a second temperature sensor 230, a third temperature sensor 232, and a controller 234.

The pump 212 provides a coolant from the coolant store 214 to the gearbox 155. Specifically, the pump 212 is disposed upstream of the coolant inlet 206 of the gearbox and provides the coolant to the gearbox 155. The coolant store 214 houses at least some of the coolant for use in the gearbox system 202. The coolant may be a lubricant oil.

The first coolant supply line 216 is in fluid communication with the coolant inlet 206 of the gearbox and the pump 212. The pump 212 provides coolant to the coolant inlet 206 through the first coolant supply line 216. The second coolant supply line 218 is in fluid communication with the coolant outlet of the gearbox and the coolant store 214. The coolant outlet 208 provides coolant to the coolant store 214 through the second coolant supply line 218.

The gearbox bypass line 220 connects the first coolant supply line 216 to the second coolant supply line 218, bypassing the coolant store 214. The gearbox bypass line 220 provides coolant heated by the gearbox 155 from the coolant outlet 208 to the first coolant supply line 216, heating the coolant that is provided to the coolant inlet 206. The heated coolant increases the efficiency of the gearbox 155 during specific engine operations, which may be increased to a target efficiency for improved operation of the engine 100. The specific engine conditions may include situations where the coolant (which may include a lubricant) is below a specific temperature (such as 100 degrees Fahrenheit) such that the viscosity of the coolant increases wear on the gearbox 155 and reduces efficiency of the gearbox 155, such as engine startup, idling in cold weather conditions, flight idle, low speed cruise, and combinations thereof.

The gearbox bypass valve 222 is disposed at a junction of the second coolant supply line 218 and the gearbox bypass line 220 and provides the heated coolant to the gearbox bypass line 220. Specifically, the gearbox bypass valve 222 is actuatable to allow a specific amount of the heated coolant into the gearbox bypass line 220. The gearbox bypass valve 222 may be actuated to a specified duty cycle, i.e., a percentage of time in a specified time period that the gearbox bypass valve 222 is fully open, to provide the specific amount of the heated coolant. The gearbox bypass valve 222 may be an active valve or a passive valve. Active valves include valves that are actuatable by a controller (described below) to open and close, such as a solenoid valve. Passive valves include valves that open and close upon contact with the heated coolant, such as a thermostatic valve that has a heat-sensitive substance with a specific melting point to open or close the valve at a specific temperature, a shape memory alloy that deforms at a specific temperature to open or close the valve, or combinations thereof.

The heat exchanger 200 cools the heated coolant from the coolant outlet 208 so that the pump 212 can supply the coolant to cool the gearbox 155. Specifically, the heat exchanger 200 includes an inlet 236 and an outlet 238, the second coolant supply line 218 is in fluid communication with the inlet 236, and the first coolant supply line 216 is in fluid communication with the outlet 238. The heated coolant flows from the second coolant supply line 218 into the inlet 236 of the heat exchanger 200, the heat exchanger 200 cools the heated coolant, and the coolant flows out from the outlet 238 of the heat exchanger 200 to the pump 212. The heat exchanger 200 may be an air-cooled oil cooler (ACOC), a fuel-cooled oil cooler (FCOC), a different type of cooler, or combinations thereof.

To increase the temperature of the coolant provided to the pump 212, the heat exchanger bypass line 224 connects the second coolant supply line 218 to the first coolant supply line 216, bypassing the heat exchanger 200 such that a specific amount of the heated coolant is not cooled by the heat exchanger 200. Specifically, the heat exchanger bypass line 224 has an inlet 240 upstream of the inlet 236 of the heat exchanger 200 and an outlet 242 downstream of the outlet 238 of the heat exchanger 200. The heat exchanger bypass valve 226 is disposed in the heat exchanger bypass line 224 and provides the heated coolant to the first coolant supply line 216. As described above with reference to the gearbox bypass valve 222, the heat exchanger bypass valve 226 may be actuated to a specified duty cycle to provide a specified amount of heated coolant to the first coolant supply line 216. The heat exchanger bypass valve 226 may be an active valve or a passive valve, such as those described above with reference to the gearbox bypass valve 222.

The first temperature sensor 228 collects first temperature data of the coolant in the first coolant supply line 216. Specifically, the first temperature sensor 228 is disposed between the outlet 238 of the heat exchanger 200 and the coolant inlet 206 of the gearbox 155. The first temperature data indicate the temperature of the coolant entering the gearbox 155.

The second temperature sensor 230 collects second temperature data from the coolant in the second coolant supply line 218. Specifically, the second temperature sensor 230 is disposed between the coolant outlet 208 of the gearbox and the inlet 236 of the heat exchanger 200. The second temperature data indicate the temperature of the heated coolant exiting the gearbox 155. The first temperature data and the second temperature data indicate an amount of heat transferred from the gearbox 155 to the coolant, which indicates how much the gearbox 155 is cooled by the coolant. In particular, a difference between the first temperature data and the second temperature data indicates an amount of heat transferred from the gearbox 155. The difference may be a measure of an efficiency of the gearbox 155, as described below. Additionally, the specific amount of heat transferred to the gearbox 155 may be determined based on additionally collected data, such as the mass flow rate of the coolant (which is based on the speed of the pump 212 and the size of the first coolant supply line 216) and the heat capacity of the gearbox 155.

The third temperature sensor 232 collects third temperature data from the gearbox 155 directly. Specifically, the third temperature sensor 232 is in thermal contact with the metal portion 210 of the gearbox 155 to directly measure the temperature of the gearbox 155. The third temperature data may be an additional measure of the efficiency of the gearbox 155, a backup temperature measurement to determine excessive wear on the gearbox 155, or combinations thereof.

The controller 234 is a computing device for operation of components of the engine 100, such as a FADEC, an EEC, or an OCM. The controller 234 is configured to control the temperature of the coolant entering the gearbox 155. Specifically, the controller 234 collects the first temperature data, the second temperature data, and the third temperature data to determine the temperature of the gearbox 155 and the temperature of the coolant entering and exiting the gearbox 155. The controller 234 is configured to actuate the gearbox bypass valve 222, the heat exchanger bypass valve 226, or both to adjust the temperature of coolant. Specifically, by actuating at least one of the gearbox bypass valve 222 or the heat exchanger bypass valve 226, the temperature of the coolant in the first coolant supply line 216 increases, which increases the temperature (and efficiency) of the gearbox 155. The controller 234 is configured to actuate the gearbox bypass valve 222, the heat exchanger bypass valve 226, or both, to specified duty cycles to provide the specific amounts of the heated coolant to the first coolant supply line 216.

The controller 234 may be configured to heat or cool the gearbox 155 to a specified temperature. The specified temperature may be based on a specified efficiency target of the gearbox 155 for specific engine operations of the gas turbine engine, such as cold start, takeoff, cruise, or landing. Example specified temperatures, as discussed below, may be between 200-300°F. To heat the gearbox 155, the controller 234 may be configured to actuate the gearbox bypass valve 222, the heat exchanger bypass valve 226, or both when the third temperature data indicate that a temperature of the metal portion 210 of the gearbox 155 is below a specified temperature, providing heated coolant from the gearbox bypass line 220 or the second coolant supply line 218 to the first coolant supply line 216. The controller 234 thus provides a closed-loop temperature control system to control the temperature of the coolant and the gearbox 155.

Additionally, the controller 234 may be configured to determine a temperature difference between the first temperature data (indicating a first temperature of the coolant upstream of the gearbox 155) and the second temperature data (indicating a second temperature of the coolant downstream of the gearbox 155) and to actuate the gearbox bypass valve 222, the heat exchanger bypass valve 226, or both when the temperature difference exceeds a threshold. The threshold may be a specific temperature difference at which the coolant maintains the gearbox 155 at the specified temperature. Yet additionally, the controller 234 may be configured to actuate the gearbox bypass valve 222, the heat exchanger bypass valve 226, or both when the third temperature data indicates that a temperature of the metal portion 210 of the gearbox 155 is below the specified temperature.

To cool the gearbox 155, the controller 234 may be configured to close the gearbox bypass valve 222, the heat exchanger bypass valve 226, or both when one or more of the first temperature data, the second temperature data, or the third temperature data indicate that the temperature of the gearbox 155 is above a second specified temperature. The second specified temperature may be a temperature at which the gearbox 155 begins to scuff, and maintaining the temperature of the gearbox 155 between the specified temperature and the second specified temperature provides the efficiency benefits of the gearbox 155 while inhibiting or preventing damage to the components of the gearbox 155. The second specified temperature is greater than the specified temperature. Upon closing the gearbox bypass valve 222, the heat exchanger bypass valve 226, or both, direction of the coolant to the gearbox bypass line 220, the heat exchanger bypass line 224, or both, ceases.

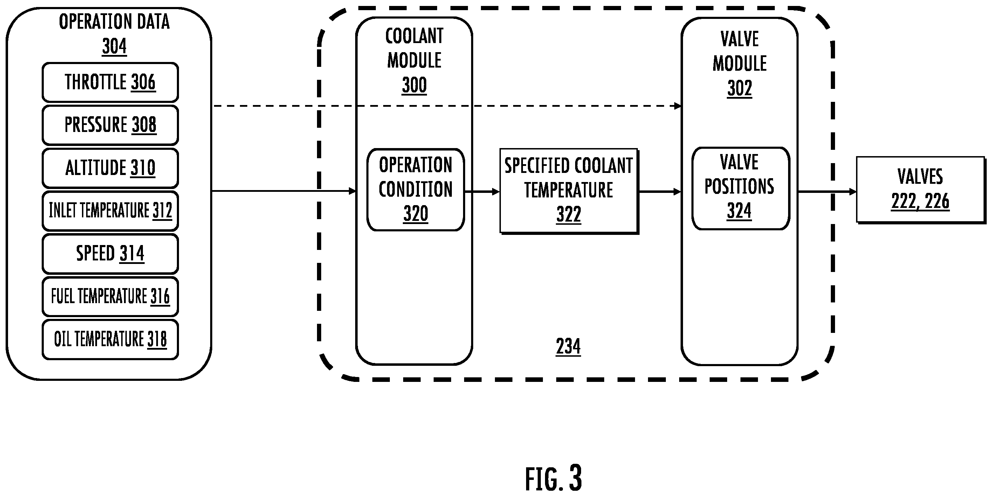

Referring now to FIG. 3, a diagram is shown that illustrates operation of the gearbox system 202. The controller 234 may be configured to determine an operating condition of the engine 100 and to determine the specified temperature based on the operating condition. In general, the specified temperature is determined to achieve a specified efficiency target for the gearbox 155. Specifically, the specified temperature is a maximum temperature of the coolant at the coolant outlet 208 of the gearbox 155 before wear or damage occurs. The controller 234 is configured to maintain the coolant at a substantially constant temperature within a threshold of the specified temperature, thereby reducing friction between components of the gearbox 155 while inhibiting excessive wear.

The controller 234 includes a coolant module 300 and a valve module 302. The coolant module 300 collects data regarding operation of the engine 100, labeled as operation data 304. The operation data 304 include data from different components of the engine 100. More specifically, the operation data 304 may include throttle position data 306, ambient air pressure data 308, altitude data 310, engine inlet temperature data 312, speed data 314 (such as a speed of the HP turbine 132, a speed of the LP turbine 134, or an engine core speed), fuel temperature data 316, oil temperature data 318, and combinations thereof.

Based on the operation data 304, the coolant module 300 can identify an operation condition 320 of the engine 100. The operation condition 320 is an indicator of how the engine 100 (and the aircraft) is operating. The operation condition 320 may be one of takeoff, cruise, or landing. The coolant module 300 can identify the operation condition 320 with a lookup table, such as Table 1 below:

**Table 1: Operation Condition Lookup Table**

| **O.C.** | **Throttle** | **Pressure** | **Altitude** | **Inlet Temp** |
|---|---|---|---|---|
| Takeoff | Accel | 14.7 psi | 0 ft | 59°F |
| Cruise | Steady | 3.47 psi | 35000 ft | -66°F |
| Landing | Decel | 13.46 psi | 2500 ft | 50°F |
| | | | | |

| **O.C.** | **Speed** | **Fuel Temp** | **Oil Temp** | **Cool. Temp** |
|---|---|---|---|---|
| Takeoff | 145 knots | 150°F-250°F | 220-390°F | 200°F |
| Cruise | 460 knots | 150°F-260°F | 260-390°F | 250°F |
| Landing | 145 knots | 55°F-270°F | 300-390°F | 300°F |

In Table 1, the "O.C." is the operation condition 320. The coolant module 300 may compare the operation data 304 to the values in the lookup table to identify the operation condition 320, and thereby determine and a specified coolant temperature 322.

Upon determining the specified coolant temperature 322, the valve module 302 determines valve positions 324 for the gearbox bypass valve 222 and the heat exchanger bypass valve 226 to heat or cool the coolant. Specifically, the valve module 302 may include a lookup table that determines the valve positions 324 based on the operation condition 320 and the specified coolant temperature 322:

**Table 2: Valve Position Lookup Table**

| **O.C.** | **Specified Cool. Temp** | **GB Bypass Valve** | **HX Bypass Valve** |
|---|---|---|---|
| Takeoff | 200°F | Off | Off |
| Cruise | 250°F | Off | On |
| Landing | 300°F | Off | Off |
| Cold Start | 200°F | On | On |

In Table 2, "GB Bypass Valve" is the position of the gearbox bypass valve 222, and "HX Bypass Valve" is the position of the heat exchanger bypass valve 226. Upon determining the valve positions 324, the controller 234 actuates the gearbox bypass valve 222 and the heat exchanger bypass valve 226 to the valve positions 324. The controller 234 then collects updated values for the first temperature data, the second temperature data, the third temperature data, and the operation data 304 to determine whether to adjust the temperature of the coolant.

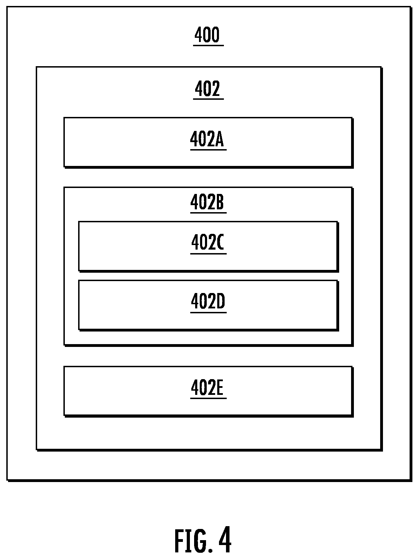

Now referring to FIG. 4, the operation of a controller 400, such as the controller 234 of the gearbox system 202, will be described. In at least certain embodiments, the controller 400 can include one or more computing device(s) 402. The computing device(s) 402 can include one or more processor(s) 402A and one or more memory device(s) 402B. The one or more processor(s) 402A can include any suitable processing device, such as a microprocessor, microcontroller, integrated circuit, logic device, and/or other suitable processing device. The one or more memory device(s) 402B can include one or more computer-readable media, including, but not limited to, non-transitory computer-readable media, RAM, ROM, hard drives, flash drives, and/or other memory devices.

The one or more memory device(s) 402B can store information accessible by the one or more processor(s) 402A, including computer-readable instructions 402C that can be executed by the one or more processor(s) 402A. The instructions 402C can be any set of instructions that when executed by the one or more processor(s) 402A, cause the one or more processor(s) 402A to perform operations. In some embodiments, the instructions 402C can be executed by the one or more processor(s) 402A to cause the one or more processor(s) 402A to perform operations, such as any of the operations and functions for which the controller 400 and/or the computing device(s) 402 are configured, the operations for operating the gearbox system 202 as described herein, and/or any other operations or functions of the one or more computing device(s) 402. The instructions 402C can be software written in any suitable programming language or can be implemented in hardware. Additionally, and/or alternatively, the instructions 402C can be executed in logically and/or virtually separate threads on the one or more processor(s) 402A. The one or more memory device(s) 402B can further store data 402D that can be accessed by the one or more processor(s) 402A. For example, the data 402D can include data indicative of power flows, data indicative of engine/ aircraft operating conditions, and/or any other data and/or information described herein.

The computing device(s) 402 can also include a network interface 402E used to communicate, for example, with the other components of the gearbox system 202, the vehicle incorporating the gearbox system 202. For example, in the embodiment depicted, as noted above, the gearbox system 202 includes one or more sensors for sensing data indicative of one or more parameters (e.g., temperature, altitude, air pressure, etc.). The controller 400 is operably coupled to the one or more sensors through, e.g., the network interface, such that the controller 400 may receive data indicative of various operating parameters sensed by the one or more sensors during operation. In such a manner, the controller 400 may be configured to operate the gearbox system 202 in response to, e.g., the data sensed by the one or more sensors.

The network interface 402E can include any suitable components for interfacing with one or more network(s), including for example, transmitters, receivers, ports, controllers, antennas, and/or other suitable components.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

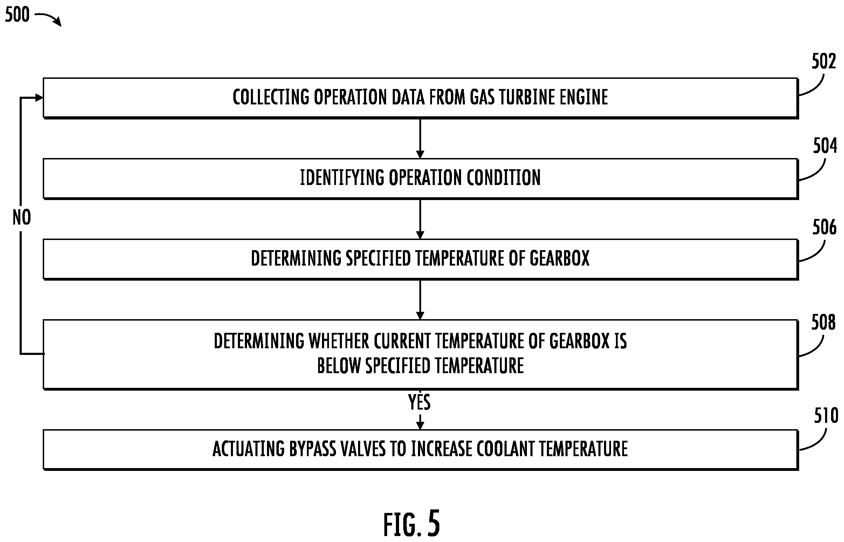

Referring now to FIG. 5, a flow diagram of a method 500 of operating a gas turbine engine in accordance with an exemplary aspect of the present disclosure is provided. The method 500 of FIG. 5 may be utilized to operate the gearbox system 202 described above with reference to FIGS. 1 through 4.

As is depicted, the method 500 includes at (502) collecting operation data from a gas turbine engine. As described above, the operation data can determine whether to increase output of a gearbox to improve operation of the gas turbine engine.

The method 500 includes at (504) identifying an operation condition of the gas turbine engine. As described above, the operation data indicate specific operation of the gas turbine engine, which can be classified into one of a plurality of operation conditions, such as takeoff, cruise, or landing. A controller may determine the operation condition based on specific values of the operation data.

The method 500 includes at (506) determining a specified temperature of the gearbox. Based on the operation condition, a higher temperature gearbox may have an increased efficiency, and more power may be drawn from the gearbox. The controller may determine the specified temperature based on the operation data used to identify the operation condition.

The method 500 includes at (508) determining whether a current temperature of the gearbox is below the specified temperature. To determine the current temperature of the gearbox, the controller collects data from one or more temperature sensors. The temperature sensors are located on components that directly or indirectly detect the temperature of the gearbox. For example, one of the temperature sensors may be located on a metal portion of the gearbox, such as a casing, a flange, or a ring gear. As another example, the temperature sensors may be located downstream of a coolant outlet of the gearbox, which detects a temperature of coolant exiting the gearbox. If the current temperature of the gearbox is below the specified temperature, the method 500 continues to (510). Otherwise, the method 500 returns to (502).

The method 500 includes at (510) actuating one or more bypass valves to increase a temperature of coolant entering the gearbox. The bypass valves direct coolant heated by the gearbox back to an inlet to the gearbox. One of the bypass valves may direct heated coolant from the outlet of gearbox to a position upstream of the inlet of the gearbox, increasing the temperature of the coolant entering the gearbox. Another of the bypass valves may direct the heated coolant around a heat exchanger, foregoing cooling of the coolant in the heat exchanger to increase the temperature of the coolant entering the gearbox.

Further aspects are provided by the subject matter of the following clauses:

A system for a gas turbine engine includes a gearbox including a coolant inlet, a coolant outlet, and a metal portion, a first coolant supply line in fluid communication with the coolant inlet of the gearbox, a first temperature sensor in thermal communication with the first coolant supply line, a second coolant supply line in fluid communication with the coolant outlet of the gearbox, a second temperature sensor in thermal communication with the second coolant supply line, a third temperature sensor in thermal communication with the metal portion of the gearbox, a bypass line coupling the first coolant supply line to the second coolant supply line, a bypass valve disposed at a junction of the second coolant supply line and the bypass line, and a controller configured to actuate the bypass valve based on at least one of first temperature data from the first temperature sensor, second temperature data from the second temperature sensor, or third temperature data from the third temperature sensor.

The system of any of the previous clauses, further including a heat exchanger including an inlet and an outlet, wherein the second coolant supply line is in fluid communication with the inlet and the first coolant supply line is in fluid communication with the outlet.

The system of any of the previous clauses, further including a second bypass line connecting the second coolant supply line to the first coolant supply line, wherein the second bypass line has an inlet upstream of the inlet of the heat exchanger and an outlet downstream of the outlet of the heat exchanger.

The system of any of the previous clauses, further including a second bypass valve disposed in the second bypass line, wherein the controller is configured to actuate the second bypass valve based on at least one of the first temperature data, the second temperature data, or the third temperature data.

The system of any of the previous clauses, wherein the second bypass line is arranged to allow coolant to bypass a heat exchanger.

The system of any of the previous clauses, wherein the first temperature sensor is disposed between the outlet of the heat exchanger and the coolant inlet of the gearbox.

The system of any of the previous clauses, wherein the second temperature sensor is disposed between the coolant outlet of the gearbox and the inlet of the heat exchanger.

The system of any of the previous clauses, wherein the controller is configured to actuate the bypass valve to increase a temperature of coolant in the first coolant supply line.

The system of any of the previous clauses, wherein the controller is configured to actuate the bypass valve to increase a temperature of the gearbox based on a detected operation condition of the gas turbine engine.

The system of any of the previous clauses, wherein the controller is configured to determine a temperature difference between the first temperature data and the second temperature data and to actuate the bypass valve when the temperature difference exceeds a threshold.

The system of any of the previous clauses, wherein the controller is configured to actuate the bypass valve when the third temperature data indicate that a temperature of the metal portion of the gearbox is below a specified temperature.

The system of any of the previous clauses, wherein the controller is configured to actuate the bypass valve to a specified duty cycle based on at least one of the first temperature data, the second temperature data, and the third temperature data.

The system of any of the previous clauses, further including a pump disposed upstream of the coolant inlet of the gearbox.

The system of any of the previous clauses, wherein the metal portion of the gearbox is a casing of the gearbox.

The system of any of the previous clauses, wherein the operation condition is one of a plurality of operation conditions including takeoff, cruise, or landing.

The system any of the previous clauses, wherein the controller is configured to collect operation data from the gas turbine engine, the operation data including at least one of: throttle position data, ambient air pressure data, altitude data, engine inlet temperature data, speed data, fuel temperature data, oil temperature data, and combinations thereof.

The system of any of the previous clauses, wherein the controller is configured to determine the operation condition based on a lookup table.

A system including a computer including a processor and a memory, the memory including instructions executable by the processor to identify an operation condition of the gas turbine engine, collect temperature data from a temperature sensor in thermal communication with a gearbox of the gas turbine engine, determine, based on the collected temperature data, whether a temperature of the gearbox is below a specified temperature, the specified temperature based on the identified operation condition, and upon determining that the temperature of the gearbox is below the specified temperature, actuate a bypass valve to direct coolant exiting a coolant outlet of the gearbox to a coolant inlet of the gearbox.

The system of any of the previous clauses, wherein the instructions further include instructions executable to determine a temperature difference between a first temperature of the coolant upstream of the coolant inlet and a second temperature of the coolant downstream of the coolant outlet and to actuate the bypass valve based on the temperature difference.

The system of any of the previous clauses, wherein the instructions further include instructions executable to actuate the bypass valve to a specified duty cycle based on at least one of the temperature of the gearbox or the temperature difference.

The system of any of the previous clauses, wherein the instructions further include instructions executable to actuate a second bypass valve to direct the coolant around a heat exchanger based on the temperature of the gearbox.

The system of any of the previous clauses, wherein the temperature sensor is in thermal contact with a metal portion of the gearbox.

The system of any of the previous clauses, wherein the instructions further include instructions executable to determine the specified temperature based on a specified efficiency target of the gearbox.

The system of any of the previous clauses, wherein the instructions further include instructions executable to, upon determining that the temperature of the gearbox is above the specified temperature, determine whether the temperature of the gearbox is below a second specified temperature, the second specified temperature being greater than the specified temperature, and, upon determining that the temperature of the gearbox is above the second specified temperature, actuate the bypass valve to cease direction of the coolant exiting the coolant outlet to the coolant inlet.

A method includes collecting operation data from a gas turbine engine, identifying an operation condition of the gas turbine engine, determining a specified temperature of a gearbox based on the identified operation condition, determining whether a current temperature of the gearbox is below the specified temperature and actuating a bypass valve to increase a coolant temperature upon determining that the current temperature of the gearbox is below the specified temperature.

The method of any of the preceding clauses, wherein the operation data indicate specific operation of the gas turbine engine, wherein the operation condition is one of a plurality of operation conditions including takeoff, cruise, or landing.

The method of any of the previous clauses, further including determining the temperature of the gearbox based on temperature data from a temperature sensor in thermal communication with a metal portion of the gearbox.

A method includes identifying an operation condition of a gas turbine engine, collect temperature data from a temperature sensor in thermal communication with a gearbox of the gas turbine engine, determining, based on the collected temperature data, whether a temperature of the gearbox is below a specified temperature, the specified temperature based on the identified operation condition, and, upon determining that the temperature of the gearbox is below the specified temperature, actuating a bypass valve to direct coolant exiting a coolant outlet of the gearbox to a coolant inlet of the gearbox.

The method of any of the previous clauses, further including actuating the bypass valve to a specified duty cycle based on at least one of the temperature of the gearbox or the temperature difference.

The method of any of the previous clauses, further including actuating a second bypass valve to direct the coolant around a heat exchanger based on the temperature of the gearbox.

The method of any of the previous clauses, further including determining the specified temperature based on a specified efficiency target of the gearbox.

The method of any of the previous clauses, further including, upon determining that the temperature of the gearbox is above the specified temperature, determining whether the temperature of the gearbox is below a second specified temperature, the second specified temperature being greater than the specified temperature, and, upon determining that the temperature of the gearbox is above the second specified temperature, actuating the bypass valve to cease direction of the coolant exiting the coolant outlet to the coolant inlet.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A system for a gas turbine engine (100), the system comprising:
a gearbox (155) including a coolant inlet (206), a coolant outlet (208), and a metal portion (210);
a first coolant supply line (216) in fluid communication with the coolant inlet (206) of the gearbox (155);
a first temperature sensor (228) in thermal communication with the first coolant supply line (216);
a second coolant supply line (218) in fluid communication with the coolant outlet (208) of the gearbox (155);
a second temperature sensor (230) in thermal communication with the second coolant supply line (218);
a third temperature sensor (232) in thermal communication with the metal portion (210) of the gearbox (155);
a bypass line connecting the first coolant supply line (216) to the second coolant supply line (218);
a bypass valve (222) disposed at a junction of the second coolant supply line (218) and the bypass line; and
a controller (234) configured to actuate the bypass valve (222, 226) based on at least one of first temperature data from the first temperature sensor (228), second temperature data from the second temperature sensor (230), or third temperature data from the third temperature sensor (232).

2. The system of claim 1, further comprising a heat exchanger (200) including an inlet (236) and an outlet (238), wherein the second coolant supply line (218) is in fluid communication with the inlet (236) and the first coolant supply line (216) is in fluid communication with the outlet (238).

3. The system of any of the preceding claims, further comprising a second bypass line connecting the second coolant supply line (218) to the first coolant supply line (216), wherein the second bypass line has an inlet (240) upstream of the inlet (236) of the heat exchanger (200) and an outlet (242) downstream of the outlet (238) of the heat exchanger (200).

4. The system of any of the preceding claims, further comprising a second bypass valve (226) disposed in the second bypass line, wherein the controller (234) is configured to actuate the second bypass valve (226) based on at least one of the first temperature data, the second temperature data, or the third temperature data.

5. The system of any of the preceding claims, wherein the first temperature sensor (228) is disposed between the outlet (238) of the heat exchanger (200) and the coolant inlet (206) of the gearbox (155).

6. The system of any of the preceding claims, wherein the second temperature sensor (230) is disposed between the coolant outlet (208) of the gearbox (155) and the inlet (236) of the heat exchanger (200).

7. The system of any of the preceding claims, wherein the controller (234) is configured to actuate the bypass valve (222) to increase a temperature of coolant in the first coolant supply line (216).

8. The system of any of the preceding claims, wherein the controller (234) is configured to actuate the bypass valve (222) to increase a temperature of the gearbox (155) based on a detected operation condition of the gas turbine engine (100).

9. The system of any of the preceding claims, wherein the controller (234) is configured to determine a temperature difference between the first temperature data and the second temperature data and to actuate the bypass valve (222) when the temperature difference exceeds a threshold.

10. The system of any of the preceding claims, wherein the controller (234) is configured to actuate the bypass valve (222) when the third temperature data indicate that a temperature of the metal portion (210) of the gearbox (155) is below a specified temperature.

11. The system of any of the preceding claims, wherein the controller (234) is configured to actuate the bypass valve (222) to a specified duty cycle based on at least one of the first temperature data, the second temperature data, and the third temperature data.

12. The system of any of the preceding claims, further comprising a pump (212) disposed upstream of the coolant inlet (206) of the gearbox (155).

13. The system of any of the preceding claims, wherein the metal portion (210) of the gearbox (155) is a casing of the gearbox (155).

14. The system of any of the preceding claims, wherein the controller is further configured to:
identify an operation condition of the gas turbine engine (100);
collect temperature data from a temperature sensor in thermal communication with the gearbox (155) of the gas turbine engine (100);
determine, based on the collected temperature data, whether a temperature of the gearbox (155) is below a specified temperature, the specified temperature based on the identified operation condition; and
upon determining that the temperature of the gearbox (155) is below the specified temperature, actuate the bypass valve (222) to direct coolant exiting a coolant outlet (208) of the gearbox (155) to a coolant inlet (206) of the gearbox (155).

15. The system of any of the preceding claims, wherein the controller is further configured to:
upon determining that the temperature of the gearbox (155) is above the specified temperature, determine whether the temperature of the gearbox (155) is below a second specified temperature, the second specified temperature being greater than the specified temperature; and
upon determining that the temperature of the gearbox (155) is above the second specified temperature, actuate the bypass valve (222) to cease direction of the coolant exiting the coolant outlet (208) to the coolant inlet (206).
